(19) Europäisches Patentamt

European Patent Office

Office européen des brevets

(11) **EP 4 687 301 A1**

(12) **EUROPEAN PATENT APPLICATION**

(43) Date of publication:
**04.02.2026 Bulletin 2026/06**

(21) Application number: **24191437.3**

(22) Date of filing: **29.07.2024**

(51) International Patent Classification (IPC):
*H04B 3/54* *(2006.01)*

(52) Cooperative Patent Classification (CPC):
**H04B 3/54**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd
8050 Zürich (CH)**

(72) Inventor: **Gajic, Zoran
723 47 Västerås (SE)**

(74) Representative: **AWA Sweden AB
Box 5117
200 71 Malmö (SE)**

(54) **A METHOD OF SUPERVISING A COMMUNICATION LINK OF A POWER TRANSMISSION SYSTEM**

(57)     A method of supervising a communication link (115) of a power transmission system (100) having a power transmission line (101), comprising:
- determining, at a local position, measured local current values and measured local voltage values;
- receiving, at the local position, via the communication link, data relating to remote phase currents, and determining a measured remote positive sequence current on basis thereof;
- estimating a remote positive sequence current on basis of the measured local current values, the measured local voltage values, and properties of the power transmission line and associated devices, which properties comprise series parameters, shunt parameters, and the distance from the local position to the remote position,
- comparing a first phase angle and a first magnitude of the estimated remote positive sequence current, with a second phase angle and a second magnitude of the measured remote positive sequence current, and
- determining, on basis of the comparison, whether there is a channel asymmetry on the communication link.

Fig. 1

## Description

### Technical field

The present disclosure relates to a method of supervising a communication link of a power transmission system, and an intelligent electronic device used for performing the method.

### Background

In an AC power transmission system, such as a high voltage (HV) or a medium voltage (MV) power transmission system, there is a risk for major short-circuit faults, e.g. from a phase to ground or between phases. Such faults have to be detected and remedied as soon as possible. Therefore, the power transmission line is monitored. The detection of some types of faults requires a combination of local and remote measurements of voltages and currents at two ends of a monitored part, also called protection zone, of the transmission line. Typically, a local IED (Intelligent Electrical Device) and a remote IED are used, where information about the measurements is sent from the remote IED to the local IED via a communication link. Commonly, the communication link is wired, typically a fiber optic cable network, although wireless communication exists as well. However, occasionally the communication links are exposed to channel asymmetry, i.e. a difference in the transmit-receive channel delays, causing false indications of faults on the power transmission line. The channel asymmetry is caused by problems in the optic cable network, often having several multiplexers etc., extending over long distances. Prior art methods of identifying such interferences are not reliable enough, for instance due to the complexity of the monitored power transmission line, which can include different sections, such as cable and overhead lines, associated shunt reactors etc., causing difficulties in calculations for the protection methods.

### Summary

In view of the above, it is an object of the present disclosure to provide an improved method of supervising the communication link.

To achieve this object, as well as other objects which will be evident from the following description, a method as defined in independent claim 1 is provided according to the present disclosure. Preferred variants of the method will be evident from the dependent claims.

More specifically, there is provided, according to a first aspect of the present disclosure, a method of supervising a communication link of a power transmission system having a power transmission line. The method comprises:

- determining measured local current values and measured local voltage values in phasor notation on basis of measurements of phase currents and phase voltages of the power transmission line at a local position;
- receiving, at the local position, via the communication link, data relating to remote phase currents, which have been measured at a remote position at a distance from the local position, and determining a measured remote positive sequence current in phasor notation on basis of the data;
- estimating a remote positive sequence current in phasor notation on basis of the measured local current values, the measured local voltage values, and properties of the power transmission line and associated devices, which properties comprise series parameters, shunt parameters, and the distance from the local position to the remote position,
- comparing a first phase angle and a first magnitude of the estimated remote positive sequence current, with a second phase angle and a second magnitude of the measured remote positive sequence current, and
- determining, on basis of the comparison, whether there is a channel asymmetry on the communication link.

By means of the present method the determination of whether there is a channel asymmetry on the communication link becomes improved relative to the prior art. The risk of opening a breaker which breaks the current of the power transmission line is reduced since the determination becomes more accurate.

According to an embodiment of the method, the operation of determining whether there is a channel asymmetry on the communication link may comprise determining that there is a channel asymmetry if a phase angle difference between the first and second phase angles deviates more than a predetermined extent from 180 degrees while a magnitude difference between the first and second magnitudes deviates less than a predetermined extent from zero. In an ideal case the estimation of the remote positive sequence current results in exactly 180 degrees of phase angle difference when the communication link is free from asymmetry and a complete estimation has been performed with correct input. However, there may be incomplete input data or other circumstances causing minor errors/deviations even if there is no channel asymmetry. Therefore, by using the respective values of 180 degrees and zero and accepting certain deviations from those values a high reliability may be obtained.

According to an embodiment of the method it may comprise determining an amount of channel asymmetry on basis of deviation of the phase angle difference, and logging data regarding that amount.

According to an embodiment of the method the operation of comparing may comprise determining a phasor sum of the estimated remote positive sequence current and the measured remote positive sequence current, and determining a magnitude difference between the first and second magnitudes, and said determining whether there is a channel asymmetry comprising determining that there is a channel asymmetry if the phasor sum exceeds a first threshold while the magnitude difference is below a second threshold. The use of phasor sum and magnitude difference has the advantage of simplicity in the calculations.

According to an embodiment of the method it may comprise logging data regarding results of the determinations of the phasor sum and the magnitude difference and adapting the first and second thresholds on basis of the logged data. Thereby, an advantageous adaptivity is introduced, which further enhances the reliability of the method.

According to an embodiment of the method it may comprise blocking, when determining that there is a channel asymmetry, a line differential protection of the power transmission system, to prevent a false indication of a fault on the transmission line. Thereby, false triggering of the breaker(s) of the power transmission line is prevented.

According to an embodiment of the method the operation of estimating a remote positive sequence current may comprise determining a first matrix having matrix parameters determined on basis of the series parameters, the shunt parameters, and the distance from the local position to the remote position, and multiplying the first matrix with a second matrix having matrix parameters based on the measured local current values and the measured local voltage values. The matrix notation and calculation facilitates the estimation.

According to an embodiment of the method the shunt parameters may be at least one of shunt parameters directly between the power transmission line and ground, and shunt parameters of at least one shunt reactor connected with the power transmission line.

According to an embodiment of the method the series parameters comprise parameters inherent of the power transmission line and parameters of at least one device, comprising a capacitor, which is series connected with the power transmission line.

According to a second aspect of the present disclosure there is provided an intelligent electronic device, which is configured to supervise a communication link of a power transmission system having a power transmission line, wherein the intelligent electronic device, IED, is configured to perform the operations of the above method.

According to a third aspect of the present disclosure there is provided a computer program product comprising instructions which, when downloaded into an intelligent electronic device, IED, connectable to a power transmission line of a power transmission system comprising a communication link, cause the intelligent electronic device to carry out the operations of the above method.

**Brief description of the Drawings**

The present disclosure will by way of example be described in more detail with reference to the appended drawings, which show example embodiments of the disclosure.

Fig. 1 illustrates some basic parts of a transmission system.
Fig. 2 is a schematic flow chart of the method according to the present disclosure.
Figs. 3 and 4 illustrate power transmissin line models.
Fig. 5 and 6 illustrate relations between different currents.
Fig. 7 illustrates a computer program product.

**Detailed description**

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

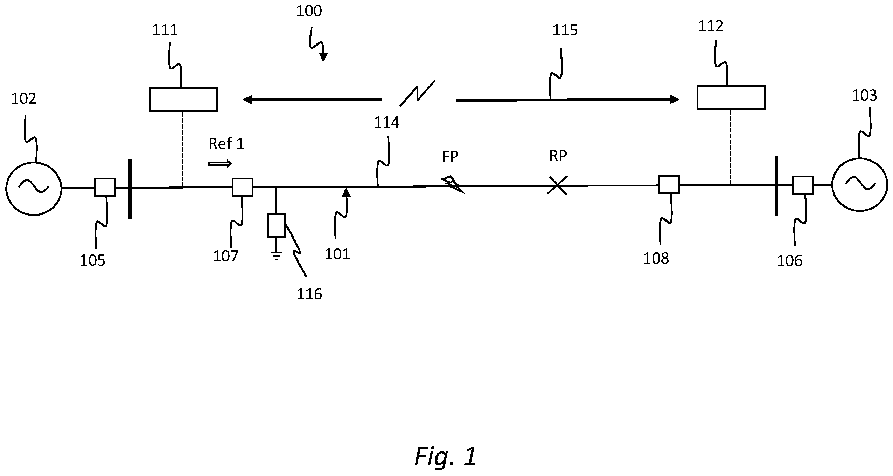

Fig. 1 shows a most general example of a power transmission system 100 comprising a power transmission line 101, having one or more phases, for example three phases, and at least two ends. In the illustrated example there are two ends. An electrical apparatus 102, 103 is connected to the transmission line 101 at each end thereof. The electrical apparatus 102, 103 may be an electrical source or an electrical load. The power transmission line 101 is provided with one or more switching devices 105, 106, 107, 108 allowing restriction of the flow of current in the power transmission system 100. A fault detection system for the power transmission system 100 comprises one or more Intelligent Electrical Devices, IEDs, 111, 112. Each IED 111, 112 is connected to the power transmission line 101, typically at an end thereof, either directly or via some other device, and is arranged to monitor the electrical activity in the power transmission line 101, for instance by means of measuring currents and voltages in the power transmission line 101 and using the measurements to detect abnormalities. For the purposes of this disclosure, one of the IEDs 111, 112 is defined as a local IED 111, and the position of the transmission line 101 where the local IED 111 is connected is called a local position. The other IED 112 is defined as a remote IED 112, connected to the power transmission line 101 at a remote position. Furthermore, at least the local IED 111 is arranged to detect a fault in the power transmission line 101 and is arranged to switch one or more of the switching devices 105-108 when necessary. It should be noted that the power transmission line 101, or a portion thereof, which is monitored by the local IED 111 constitutes the protection zone 114. The protection zone 114 may correspond with the distance between the local and remote IEDs 111, 112, but it may be both shorter and longer than that distance as well.

As understood by the person skilled in the art the overall structure of the power transmission system shown in Fig. 1 is a mere example among an almost infinite number of variants. To give just a brief view of the variety, and in addition to what has been described above, the power transmission system may be a part of or connected to the grid, the power sources may be different kinds of power sources such as wind power plants, solar power plants, nuclear power plants, a transformer, etc., the loads may be different kinds of loads such as a production site, etc. The power transmission system may comprise a plurality of power transmission lines, etc. The power transmission line may be an HV AC line or an MV AC line, it may extend between power sources, between a power source and a load, etc., and, thus, as recognized above, it may constitute what is also referred to as a distribution line. Further, the power transmission line may be, for instance, a power cable or an overhead line, OHL. The length of the power transmission line 101 may vary to a large extent, from a few kilometers, or even shorter, up to several hundreds of kilometers. The problems addressed by the present disclosure are mainly present, or in any case bigger, for longer distances.

Furthermore, the power transmission system 1 comprises a communication link 115, which is typically wired as mentioned above. The communication link 115 is used for sending data between the local and remote IEDs 111, 112, such as sending measurement data from the remote IED 112 to the local IED 111. The communication link 115 is supervised in order to detect channel asymmetry which may cause false indications of faults on the power transmission line 101.

Further, the power transmission system 1 may comprise one ore more shunt reactors 116 connected with the power transmission line 101.

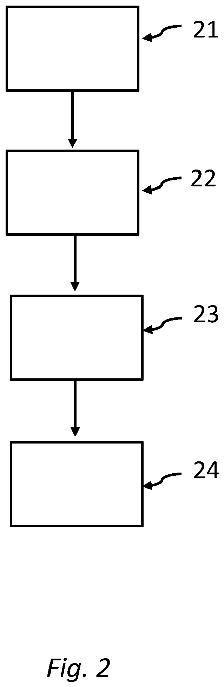

With reference to Fig. 2 an embodiment of a method of supervising the communication link 115 according to the present disclosure, comprises the operations of:

- determining 21 measured local current values and measured local voltage values in phasor notation on basis of measurements of phase currents and phase voltages of the power transmission line at a local position;
- receiving 22, at the local position, via the communication link 115, data relating to remote phase currents, which have been measured at a remote position at a distance from the local position, and determining a measured remote positive sequence current in phasor notation on basis of the data;
- estimating 23 a remote positive sequence current in phasor notation on basis of the measured local current values, the measured local voltage values, and properties of the power transmission line and associated devices, which properties comprise series parameters, shunt parameters, and the distance from the local position to the remote position;
- comparing 24, a first phase angle and a first magnitude of the estimated remote positive sequence current, with a second phase angle and a second magnitude of the measured remote positive sequence current; and
- determining on basis of the comparison, whether there is a channel asymmetry on the communication link 115.

If it is determined that there is a channel asymmetry the local IED 111 is prevented from indicating that a fault has occurred on the power transmission line 101. Thereby, a false indication of a fault as well as a tripping caused thereby is prevented.

The local IED 111 is configured to perform the above-mentioned operations of the method.

More particularly, for instance, the operation of determining measured local current values and measured local voltage values in phasor notation may involve actions performed fully by the local IED 111. Thus, the local IED 111 may perform the measurements of phase currents and phase voltages at the local position and calculate the associated phasors. The data relating to remote phase currents may have been generated by the remote IED 112 by measuring the phase currents at the remote position and transforming them appropriately to be sent via the communication link 115.

As partly mentioned above, when there is no channel asymmetry, and no fault on the power transmission line 101, the phase angle difference between the estimated remote positive sequence current and the measured remote positive sequence current is ideally 180 degrees, and the magnitude difference therebetween is zero. This would mean that the "predetermined extents" mentioned above are zero. However, it may be feasible to introduce a margin allowing, for example, an extent of measurement inaccuracy. It should be mentioned, though, that when performing the estimation of the remote positive sequence current in the most accurate way, as defined in the present disclosure, the ideal situation can be obtained, at least theoretically.

It is understood that the present method may be performed as a continuous monitoring of the communication link 115 where the operations are performed repeatedly. Thereby, for instance, the phase angle and magnitude data used in the comparison as well as the outcome of the comparison may be logged and those logged data may be used to, over time, improve the determination of whether there is an asymmetry on the communication link. Since the actual conditions on the power transmission line may cause a minor deviation from the ideal situation, which can be regarded as an error, in the estimation of the remote positive sequence current, the first and second thresholds may initially be set with an initial margin, and that margin may be reduced based on the logged data. Thus, adaptive thresholds may be applied. Additionally, deviations, trends and the like over time may be observed in the logged data and used to adapt the first and second thresholds.

The comparison may be performed by means of determining a phasor sum of the phasors of the estimated and measured positive sequence currents, respectively, and determining a magnitude difference between the estimated and measured remote positive sequence currents, since the phase angle is a part of the phasor expression.

Further, it may be determined that there is a channel asymmetry if the phasor sum exceeds a first threshold while the magnitude difference is below a second threshold, since channel asymmetry only causes a phase angle error while it does not affect the magnitudes. For the above-mentioned ideal case the phasor sum will be zero since the phase shift between the phasors is 180 degrees and the amplitudes of the phasors, consequently, differ only in sign. Thus, ideally the first and second thresholds may be zero. However, in practise it may be suitable to allow a certain extent of deviation from the ideal situation, and so the first and second thresholds may be set to non-zero values.

If a true fault occurs on the power transmission line 101, such as a phase-to-ground shortage, which has an impact on one or more phase currents at the remote position, this typically causes a significant change of the magnitude of the positive sequence current at the remote position, while a channel asymmetry on the communication link 115, typically, does not cause such a significant change of the magnitude of the positive sequence current at the remote position. On the other hand, in both cases a significant change of the phase angle difference between the estimated and measured remote positive sequence currents will occur. This change may be detected by determining the phasor sum. Therefore, by basing the determination of whether there is a channel asymmetry on the communication link 115 on the combination of the phasor sum and the magnitude difference it is possible to distinguish a pure channel asymmetry from a true fault on the power transmission line 101.

In order to ensure that the determination of the channel asymmetry as such does not cause erroneous prevention when a fault has actually occurred, the accuracy of this determination has to be high enough. Another factor is the size of the threshold, which may be properly chosen. For an ideal situation, as will be further detailed below, the phasor sum and the magnitude difference are both zero when there is no channel asymmetry. Consequently, if the phasor sum is non-zero there may be a channel asymmetry. However, in order to give room for some inaccuracy of the operations, the first threshold may be chosen to be non-zero. The size of the threshold may also depend on how the calculations for fault detection are arranged, where they may have a robustness for a minor channel asymmetry, which anyhow would not cause a fault indication and a triggering of a breaker. By basing the estimations of the remote current values on properties of the power transmission line 101 comprising series parameters, shunt parameters, and the distance from the local position to the remote position, it is ensured that a significant level of accuracy is obtained.

More particularly, the estimated remote current values may be obtained as follows.

The estimation may employ a matrix notation in order to facilitate the actual calculations that are made, by comprising determining a first matrix having matrix parameters determined on basis of the series parameters, such as the line impedance, which is a series parameter inherent of the very the power transmission line 101, the capacitance of series connected capacitors, which is still a series parameter but external of the power transmission line 101 as such, the shunt parameters, which can be seen as parallel parameters, and which may include shunt capacitances of the power transmission line 101 and parameters of shunt reactors 116 connected in parallel with the power transmission line 101, and the distance from the local position to the remote position, and multiplying the first matrix with a second matrix having matrix parameters based on the measured local current values and the measured local voltage values. Furthermore, in order to facilitate the actual calculations, a phasor notation may be employed for the currents and voltages, and sequence components thereof may be determined for positive, negative and zero sequence. In other words, the estimation on basis of the plurality of system parameters includes determining phasors for the measured local current values and the measured local voltage values, which are phase voltages and phase currents, for instance by sampling the measured local current values and the measured local voltage values, and applying a Discrete Fourier Transform, DFT, filter, or some other kind of appropriate filtering. Then the sequence components for the measured local current values and the measured local voltage values of a three-phase power transmission line can be determined by matrix calculations according to:

$$\begin{pmatrix} I_0 \\ I_1 \\ I_2 \end{pmatrix} = \frac{1}{3} * \begin{pmatrix} 1 & 1 & 1 \\ 1 & a & a^2 \\ 1 & a^2 & a \end{pmatrix} * \begin{pmatrix} I_A \\ I_B \\ I_C \end{pmatrix}$$

$$\begin{pmatrix} U_0 \\ U_1 \\ U_2 \end{pmatrix} = \frac{1}{3} * \begin{pmatrix} 1 & 1 & 1 \\ 1 & a & a^2 \\ 1 & a^2 & a \end{pmatrix} * \begin{pmatrix} U_A \\ U_B \\ U_C \end{pmatrix}$$

Eqn. 1 and 2

where the three phases are indexed by A, B, and C, and the positive, negative and zero sequences are indexed by 1, 2, and 0, respectively. The factor a is a complex operator, such that $a=e^{j*120°}$, and $j^2 = -1$. Consequently, $I_0$, $I_1$, $I_2$ represent the sequence current components for the zero, positive, and negtive sequences, and $U_0$, $U_1$, $U_2$, represent the sequence voltage components for the zero, positive, and negative sequences.

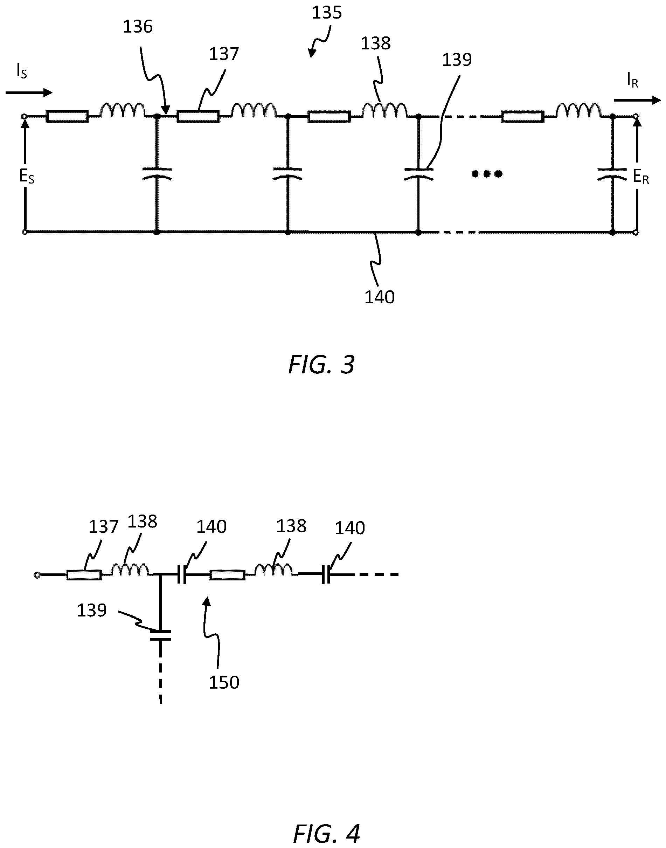

Referring to Fig. 3, for a general power transmission line there is a power transmission line model 135, which has a line impedance represented by series connected resistors 137 and inductors 138 along, and inherent of, the power transmission line 136, and shunt capacitors 139 between the power transmission line 136 and a parallel line 140, which for instance can be ground. A two-port network model can be applied on the power transmission line model 135. The two-port network is a model of any electric network or device which has two pairs of terminals which can be connected to external equipment, and is represented by a black box having a first port with two terminals on one side of the black box, and another port with two terminals on the opposite side of the black box. For the power transmission line model, the two-port equation on matrix notation becomes:

$$\begin{bmatrix} E_S \\ I_S \end{bmatrix} = \begin{bmatrix} A & B \\ C & D \end{bmatrix} * \begin{bmatrix} E_R \\ I_R \end{bmatrix}$$

Eqn. 3

$E_S$ and $I_S$ are a sending line end, i.e. the local position, voltage and current phasor pair for either positive, negative, or zero sequence. $E_R$ and $I_R$ are receiving line end, i.e. the remote position, voltage and current phasor pair for the same sequence. Referring to the present disclosure, the sending line end voltage and current phasor pair Es and Is correspond with the sequence voltage components $U_0$, $U_1$, $U_2$ and the sequence current components $I_0$, $I_1$, $I_2$ of the local phase voltages and the local phase currents measured at the local IED 111. Similarly, the receiving line end voltage and current phasor pair $E_R$ and $I_R$ corresponds with the estimated sequence voltage and current components at the remote position $U_0@RP$, $U_1@RP$, $U_2@RP$, $I_0@RP$, $I_1@RP$, $I_2@RP$. A, B, C, and D are complex parameters, and they are fixed complex numbers for a particular power transmission line and a selected remote position. By simple mathematical manipulations the matrix equation can be rearranged to adapt to the present purposes, that is the estimation, as follows:

$$\begin{bmatrix} E_R \\ I_R \end{bmatrix} = \begin{bmatrix} D & -B \\ -C & A \end{bmatrix} * \begin{bmatrix} E_S \\ I_S \end{bmatrix}$$

Eqn. 4

Thereby, the ABCD matrix corresponds with the above-mentioned first matrix, and the matrix with parameters $E_S$ and $I_S$ corresponds with the above-mentioned second matrix, while the matrix with parameters $E_R$ and $I_R$ contains the estimated sequence voltage and sequence current components for the sequence being processed. However, this is merely true if the impact of shunt reactors is not taken into account. On the other hand, when shunt reactors and series capacitors are present in the AC power transmission system 100, it is advantageous to include them when estimating the voltages and currents for the remote position RP. This will be further described below.

The following formulas can be used to calculate the matrix ABCD parameters for the power transmission line 101 itself:

$$A = cosh\left(d * \sqrt{z' * y'}\right)$$

Eqn. 5

$$B = \sqrt{\frac{z'}{y'}} * sinh\left(d * \sqrt{z' * y'}\right)$$

Eqn. 6

$$C = \sqrt{\frac{y'}{z'}} * sinh\left(d * \sqrt{z' * y'}\right)$$

Eqn. 7

$$D = A$$

Eqn. 8

where z' is a series impedance per unit length of the power transmission line, i.e. Z/LineLength in $\Omega$/km where Z is the line impedance in Ohms;

y' is admittance to ground per unit length of the power transmission line, i.e. Y/LineLength in Siemens/km, where Y is the total shunt admittance in Siemens;

LineLength is the length of the power transmission line being protected in km; and d is the distance from the local position to the remote position RP.

It should be noted that these ABCD parameters have fixed complex values for a specified remote position and that they can be calculated off-line and predetermined. Two sets of such matrix parameters may be used for a power transmission line. One ABCD-parameter set represents the transmission line network model for positive and negative sequence, and the other ABCD-parameter set represents the transmission line network model for zero sequence. Once these ABCD parameters have been obtained corresponding 2x2 matrixes for the power transmission line 101 can be established. In a real situation, typically all the required data is available in form of predetermined tables of relevant values. Further, it is to be noted that when two or more two-port networks are interconnected, i.e. connected in series such that an output port of one two-port network is connected with an input port of another two-port network, their ABCD matrices are multiplied with each other.

Shunt reactors 116 are commonly used on, and connected directly to, long Overhead Lines, OHLs, and cables in order to compensate for the reactive power generated by the shunt capacitances, represented by the shunt capacitors 139 in the model 135, of the transmission line 101.

The sequence impedances of such a shunt reactor are zero sequence reactance $X_0$, positive sequence reactance $X_1$, and negative sequence reactance $X_2$. Applying the two-port network model to the shunt reactor renders two ABCD matrices as follows:

$$\begin{bmatrix} A_1 & B_1 \\ C_1 & D_1 \end{bmatrix} = \begin{bmatrix} 1 & 0 \\ 1/jX1 & 1 \end{bmatrix}$$

Eqn. 9

$$\begin{bmatrix} A_0 & B_0 \\ C_0 & D_0 \end{bmatrix} = \begin{bmatrix} 1 & 0 \\ 1/jX0 & 1 \end{bmatrix}$$

Eqn. 10

where the matrix parameters $A_1$, $B_1$, $C_1$, $D_1$ form the ABCD matrix for the positive sequence. As mentioned above, the ABCD matrix for the negative sequence is equal to the ABCD matrix for the positive sequence. Correspondingly, the matrix parameters $A_0$, $B_0$, $C_0$, $D_0$ form the ABCD matrix for zero sequence. It can be noted that the C parameter, 1/jX, is an admittance.

The shunt reactor 116 can have a fixed reactor impedance. However, alternatively it can have a variable impedance, which depends on the used tap position for the variable shunt reactor. Such a variable impedance is readily coped with in the matrix operations. Typically, the reactor values for different tap positions are obtainable from a predetermined table.

It is to be noted that other impedance or admittance components can be modelled in a similar way, such as e.g. series capacitors connected in series with the transmission line 101, as will be understood by the person skilled in the art from the present description. Thus, as illustrated in Fig. 4, the power transmission line model 150 may include series capacitors 140, which may be modelled by corresponding ABCD matrices for positive and zero sequence according to:

$$\begin{bmatrix} A1 & B1 \\ C1 & D1 \end{bmatrix} = \begin{bmatrix} 1 & \frac{1}{j*2*\pi*f*C} \\ 0 & 1 \end{bmatrix} \qquad \text{Eqn. 11}$$

$$\begin{bmatrix} A0 & B0 \\ C0 & D0 \end{bmatrix} = \begin{bmatrix} 1 & \frac{1}{j*2*\pi*f*C} \\ 0 & 1 \end{bmatrix} \qquad \text{Eqn. 12}$$

Referring to the present method, as mentioned above, when estimating the voltages and currents at the remote position RP, it is advantageous to take into account both properties of the power transmission line 101 as such, and properties of external elements, like the shunt reactors 116 and the series capacitors 140, which are associated with the power transmission line 101 and affects its behaviour. With the matrix notation this can be done by matrix multiplication, as mentioned above for interconnected two-port networks. Thus, by denoting the ABCD matrix for the power transmission line as such MTL, the first matrix MF, the second matrix MS, and the resulting matrix MRP, since it contains parameters for the remote position RP, and further denoting the shunt reactor matrix MSR, and the series capacitor matrix MSC, the following equation can be employed:

$$\text{MRP=MF*MS=MTL*MSR*MSC*MS} \qquad \text{Eqn. 13}$$

In order to determine the individual parameters of the matrices, properties associated with the power transmission line 101, and more particularly the part of the power transmission line constituting the protected line, which may very well constitute the whole length of the transmission line between two main connection sites, such as at a wind farm and at the grid, are obtainable from a table, or some other suitable representation, which has been set up in advance. For long transmission lines such a table may contain values for several different sections of the transmission line, simply because it is often built in sections having different Z and Y values, such as a combination of OHL and cable sections. Often, the section values can be added to a total value for the whole length, but if not, a separate ABCD matrix can be determined for each section. These section matrices are then multiplied with each other to form the single matrix MTL for the power transmission line, or they are used separately. Similarly, by multiplying this transmission line matrix MTL with the shunt reactor matrix MSR and the series capacitor matrix MSC finally the first matrix MF representing the whole protected object, i.e. all relevant sections and associated shunt parameters and series parameters, is generated. It should be noted that the matrices are multiplied in the order that the physical parts that they represent occur along the power transmission line.

The table of properties can hold, for example, resistance, reactance, and capacitance, all for positive sequence as well as zero sequence. By applying the above equations Eqn. 5 - Eqn. 8, the matrix for the power transmission line/protected line MTL can be determined.

For the/each shunt reactor 116 predetermined values of reactance are obtained as predetermined data, or reactive power and voltage are noted, from which the reactance is easily obtained. Then the shunt reactor matrices MSR for positive and zero sequences are determined according to the above equations Eqns. 9 and 10.

Then, for positive and zero sequences, the first matrix MF can be determined as the product of the respective transmission line matrix MTL, shunt reactor matrix MSR, and the series capacitor matrix MSC, i.e. MF=MTL*MSR. Finally, for each sequence, the remote position matrix MRP is determined as the product of the first matrix MF and the second matrix MS, i.e. MRP=MF*MS. Recalling that the first matrix is the same for the positive and negative sequences, the following equations will provide the final estimates of the voltages and currents at the remote position for all sequences:

$$\begin{bmatrix} U_1@RP \\ I_1@RP \end{bmatrix} = \begin{bmatrix} MD1 & -MB1 \\ -MC1 & MA1 \end{bmatrix} * \begin{bmatrix} U_1 \\ I_1 \end{bmatrix} \qquad \text{Eqn. 14}$$

$$\begin{bmatrix} U_2@RP \\ I_2@RP \end{bmatrix} = \begin{bmatrix} MD1 & -MB1 \\ -MC1 & MA1 \end{bmatrix} * \begin{bmatrix} U_2 \\ I_2 \end{bmatrix} \qquad \text{Eqn. 15}$$

$$\begin{bmatrix} U_0@RP \\ I_0@RP \end{bmatrix} = \begin{bmatrix} MD0 & -MB0 \\ -MC0 & MA0 \end{bmatrix} * \begin{bmatrix} U_0 \\ I_0 \end{bmatrix} \qquad \text{Eqn. 16}$$

Having, thus obtained the estimated remote positive sequence current it is possible to compare it with the measured remote positive sequence current, which is calculated according to Eqn. 1 by means of the measured remote phase currents. As mentioned above, the comparison may be done by means of calculating a phasor sum and a magnitude difference. As well-known to the person skilled in the art a phasor notation is a vector notation of a magnitude and a phase angle, such as $I_m\angle\phi$. The phasor of the estimated remote positive sequence current may be denoted as $I_1\_RmtE$, and the phasor of the measured remote positive sequence current may be denoted as $I_1\_Rmt$. Then the phasor sum may be expressed as:

$$\Sigma P = |\ I_1\_RmtE + I_1\_Rmt\ | \qquad \text{Eqn. 17}$$

The magnitude difference may be expressed as:

$$\Delta M = |\ I_1\_RmtE\ |\ -\ |\ I_1\_RmtE\ | \qquad \text{Eqn. 18}$$

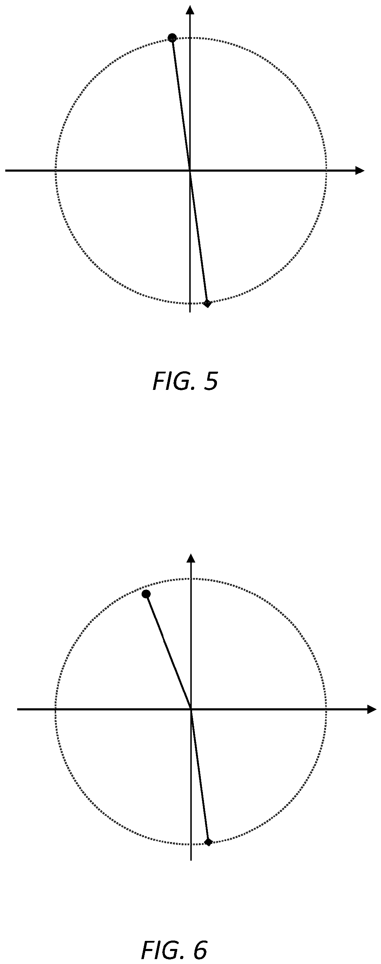

As an example, having measured the remote phase currents with the remote IED 112 at a point of time where there is no channel asymmetry and no transmission line fault, and having calculated the corresponding measured remote positive sequence current $I_1\_Rmt$ and having calculated the estimated remote positive sequence current $I_1\_RmtE$ with the local IED 111 for the same point in time, a plot of those may look as in Fig. 5. The measured remote positive sequence current $I_1\_Rmt$ is indicated with a circle, and the estimated remote positive sequence current $I_1\_RmtE$ is indicated with a rhomb. As can be seen the phasor of the measured positive sequence remote current $I_1\_Rmt$ has the same magnitude as the phasor of the estimated positive sequence remote current $I_1\_RmtE$, and their phase angles differ exactly 180 degrees. Consequently, the phasor sum $\Sigma P$ is zero and the magnitude difference $\Delta M$ is zero as well. On the other hand, at the occurrence of a channel asymmetry the relation between those currents will change, as illustrated in Fig. 6. In this case, at a different point of time than in the above case, the phasor of the measured positive sequence remote current $I_1\_Rmt$ has a different phase angle than in the first graph, and the phase angle difference deviates significantly from 180 degrees. Similarly, the magnitude of the measured positive sequence remote current $I_1\_Rmt$ deviates insignificantly from the magnitude of the estimated positive sequence remote current $I_1\_RmtE$. By determining the phasor sum $\Sigma P$ and the magnitude difference $\Delta M$, it can be concluded that the phasor sum $\Sigma P$ exceeds the first threshold, while the magnitude difference $\Delta M$ is below the second threshold. Consequently, it is determined that there is a channel asymmetry. This result activates a blocking operation which prevents the local IED 111 from triggering a breaker, in case it would have determined, for instance on basis of the measured local and remote current or voltage values, that a critical fault has occurred on the power transmission line 101 causing such an operation.

As mentioned above, in the ideal case the thresholds could be set to zero, while in practise a likelihood of minor errors should be taken into account. However, by logging the results, as also explained above, it will be possible to use adaptable thresholds. Thus, for instance, initially the first and second thresholds may be chosen to have values with an initial margin to expected possible deviations, and over time the logged results may show that the deviations are smaller than expected. Then the first and second thresholds may be lowered to make the method more sensitive to detecting channel asymmetry.

Furthermore, the method may include determining an amount of channel asymmetry on basis of deviation of the phase angle difference, and logging data regarding that amount. This data may be provided to the end user who, thereby, can monitor different aspects of the channel asymmetry, e.g. how the channel asymmetry changes over months or years.

As noted above, for the present method only the positive sequence current is used. However, for sake of completeness, and since the method is actually related to the differential protection, where more than one sequence is often used for detecting different kinds of faults, above generally calculations are presented for all three sequences.

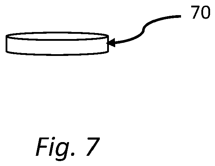

Figure 7 most schematically illustrates that as an aspect of the present disclosure, there is provided a computer program product 70 comprising instructions which, when downloaded into the IED 111 cause the IED 111 to carry out operations comprising:

- determining measured local current values and measured local voltage values in phasor notation on basis of measurements of phase currents and phase voltages of the power transmission line at a local position;
- receiving, via the communication link, data relating to remote phase currents, which have been measured at a remote position at a distance from the IED, and determine a measured remote positive sequence current in phasor notation on basis of the data;
- estimating a remote positive sequence current in phasor notation on basis of the measured local current values, the measured local voltage values, and properties of the power transmission line and associated devices, which properties comprise series parameters, shunt parameters, and the distance from the local position to the remote position,
- comparing a first phase angle and a first magnitude of the estimated remote positive sequence current, with a second phase angle and a second magnitude of the measured remote positive sequence current, and
- determining, on basis of the comparison, whether there is a channel asymmetry on the communication link.

While the present disclosure has been illustrated and described in detail in the drawings and foregoing description, such illustration and description are to be considered illustrative or exemplary and not restrictive.

Although features and elements are described above in particular combinations, each feature or element can be used alone without the other features and elements or in various combinations with or without other features and elements.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain features are recited in mutually different dependent claims does not indicate that a combination of these features cannot be used to advantage. Any reference signs in the claims should not be construed as limiting the scope.

**Claims**

1.  A method of supervising a communication link of a power transmission system having a power transmission line, the method comprising:

    - determining measured local current values and measured local voltage values in phasor notation on basis of measurements of phase currents and phase voltages of the power transmission line at a local position;
    - receiving, at the local position, via the communication link, data relating to remote phase currents, which have been measured at a remote position at a distance from the local position, and determining a measured remote positive sequence current in phasor notation on basis of the data;
    - estimating a remote positive sequence current in phasor notation on basis of the measured local current values, the measured local voltage values, and properties of the power transmission line and associated devices, which properties comprise series parameters, shunt parameters, and the distance from the local position to the remote position,
    - comparing a first phase angle and a first magnitude of the estimated remote positive sequence current, with a second phase angle and a second magnitude of the measured remote positive sequence current, and
    - determining, on basis of the comparison, whether there is a channel asymmetry on the communication link.

2.  The method according to claim 1, said determining whether there is a channel asymmetry on the communication link comprising determining that there is a channel asymmetry if a phase angle difference between the first and second phase angles deviates more than a predetermined extent from 180 degrees while a magnitude difference between the first and second magnitudes deviates less than a predetermined extent from zero.

3.  The method according to claim 2, comprising determining an amount of channel asymmetry on basis of deviation of the phase angle difference, and logging data regarding that amount.

4.  The method according to any one of the preceding claims, said comparing comprising determining a phasor sum of the estimated remote positive sequence current and the measured remote positive sequence current, and determining a magnitude difference between the first and second magnitudes, and said determining whether there is a channel asymmetry comprising determining that there is a channel asymmetry if the phasor sum exceeds a first threshold while the magnitude difference is below a second threshold.

5.  The method according to claim 4, comprising logging data regarding results of the determinations of the phasor sum and the magnitude difference and adapting the first and second thresholds on basis of the logged data.

6. The method according to any one of the preceding claims, further comprising blocking, when determining that there is a channel asymmetry, a line differential protection of the power transmission system, to prevent a false indication of a fault on the transmission line.

7. The method according to claim any one of the preceding claims, said estimating a remote positive sequence current comprising determining a first matrix having matrix parameters determined on basis of the series parameters, the shunt parameters, and the distance from the local position to the remote position, and multiplying the first matrix with a second matrix having matrix parameters based on the measured local current values and the measured local voltage values.

8. The method according to any one of the preceding claims, wherein the shunt parameters are at least one of shunt parameters directly between the power transmission line and ground, and shunt parameters of at least one shunt reactor connected with the power transmission line.

9. The method according to any one of the preceding claims, wherein the series parameters comprise parameters inherent of the power transmission line and parameters of at least one device, comprising a capacitor, which is series connected with the power transmission line.

10. An intelligent electronic device, being configured to supervise a communication link of a power transmission system having a power transmission line, wherein the intelligent electronic device, IED, is configured to:

   - determine measured local current values and measured local voltage values in phasor notation on basis of measurements of phase currents and phase voltages of the power transmission line at a local position;
   - receive, via the communication link, data relating to remote phase currents, which have been measured at a remote position at a distance from the IED, and determine a measured remote positive sequence current in phasor notation on basis of the data;
   - estimate a remote positive sequence current in phasor notation on basis of the measured local current values, the measured local voltage values, and properties of the power transmission line and associated devices, which properties comprise series parameters, shunt parameters, and the distance from the local position to the remote position,
   - compare a first phase angle and a first magnitude of the estimated remote positive sequence current, with a second phase angle and a second magnitude of the measured remote positive sequence current, and
   - determining, on basis of the comparison, whether there is a channel asymmetry on the communication link.

11. The Intelligent electronic device according to claim 10, wherein the IED is configured to determine that there is a channel asymmetry if a phase angle difference between the first and second phase angles deviates more than a predetermined extent from 180 degrees while a magnitude difference between the first and second magnitudes deviates less than a predetermined extent from zero.

12. The intelligent electronic device according to claim 10 or 11, wherein the comparison comprises determining a phasor sum of the estimated remote positive sequence current and the measured remote positive sequence current, and determining a magnitude difference between the first and second magnitudes, and said determining whether there is a channel asymmetry comprising determining that there is a channel asymmetry if the phasor sum exceeds a first threshold while the magnitude difference is below a second threshold.

13. A computer program product comprising instructions which, when downloaded into an intelligent electronic device, IED, connectable to a power transmission line of a power transmission system comprising a communication link, cause the intelligent electronic device to carry out operations comprising:

   - determining measured local current values and measured local voltage values in phasor notation on basis of measurements of phase currents and phase voltages of the power transmission line at a local position;
   - receiving, via the communication link, data relating to remote phase currents, which have been measured at a remote position at a distance from the IED, and determine a measured remote positive sequence current in phasor notation on basis of the data;
   - estimating a remote positive sequence current in phasor notation on basis of the measured local current values, the measured local voltage values, and properties of the power transmission line and associated devices, which properties comprise series parameters, shunt parameters, and the distance from the local position to the remote position,

- comparing a first phase angle and a first magnitude of the estimated remote positive sequence current, with a second phase angle and a second magnitude of the measured remote positive sequence current, and
- determining, on basis of the comparison, whether there is a channel asymmetry on the communication link.

*Fig. 1*

102
105
111
107
Ref 1
116
100
101
114
FP
RP
115
108
112
106
103

*Fig. 2*

FIG. 3

FIG. 4

*FIG. 5*

*FIG. 6*

70

**Fig. 7**

| Europäisches Patentamt European Patent Office Office européen des brevets | **EUROPEAN SEARCH REPORT** | **Application Number** EP 24 19 1437 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/186490 A1 (ABB SCHWEIZ AG [CH]) 3 October 2019 (2019-10-03) * page 4, line 29 - page 5, line 5 * * page 6, line 22 - page 7, line 9 * * page 8, line 30 - page 9, line 6 * * page 11, lines 5-9 * * page 21, lines 21-27 * * page 21, line 29 - page 22, line 2 * ----- | 1,10,13 | INV. H04B3/54 |
| A | WO 2005/059572 A1 (PULSE UTILITIES LTD [NZ]; ABBOT STEPHEN ALLEN [NZ] ET AL.) 30 June 2005 (2005-06-30) * abstract * ----- | 1-13 | |
| | | | **TECHNICAL FIELDS SEARCHED (IPC)** H04B |

The present search report has been drawn up for all claims

| Place of search | Date of completion of the search | Examiner |
|---|---|---|
| The Hague | 8 January 2025 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 687 301 A1**

## ANNEX TO THE EUROPEAN SEARCH REPORT
## ON EUROPEAN PATENT APPLICATION NO.

EP 24 19 1437

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2025

| Patent document cited in search report | Publication date | Patent family member(s) | | Publication date |
|---|---|---|---|---|
| WO 2019186490 A1 | 03-10-2019 | CN | 111937264 A | 13-11-2020 |
| | | EP | 3776778 A1 | 17-02-2021 |
| | | US | 2021143633 A1 | 13-05-2021 |
| | | WO | 2019186490 A1 | 03-10-2019 |
| WO 2005059572 A1 | 30-06-2005 | AU | 2004298704 A1 | 30-06-2005 |
| | | CA | 2550436 A1 | 30-06-2005 |
| | | CN | 1950706 A | 18-04-2007 |
| | | EP | 1706748 A1 | 04-10-2006 |
| | | NZ | 530254 A | 27-10-2006 |
| | | WO | 2005059572 A1 | 30-06-2005 |
| | | ZA | 200605845 B | 24-06-2009 |

EPO FORM P0459

For more details about this annex : see Official Journal of the European Patent Office, No. 12/82